# EUROPÄISCHE PATENTANMELDUNG

(11) **EP 4 714 751 A1**
(43) Veröffentlichungstag der Anmeldung: **25.03.2026**
(21) Anmeldenummer: 25202945.9
(22) Anmeldetag: 18.09.2025
(51) Int. Cl.: B60R 13/02, B60R 7/08

(54) **INNENVERKLEIDUNG FÜR EIN FAHRZEUG**

(30) Priorität: 20.09.2024 DE 102024209026
(71) Anmelder: Volkswagen Aktiengesellschaft, 38440 Wolfsburg (DE)
(72) Erfinder: Thies, Lukas, 38440 Wolfsburg (DE)

(57) **Zusammenfassung**

Die Erfindung betrifft eine Innenverkleidung (1) für ein Fahrzeug, mit einer Einhängekontur (11), in die zumindest ein Anbauteil (13) lösbar einhängbar ist, wobei das Anbauteil (13) einen Haltearm (17) aufweist, der bei eingehängtem Anbauteil (13) auf einer Abstützbasis (31) der Einhängekontur (11) der Innenverkleidung (1) abgestützt ist unter Bildung einer Kippachse (K), um die ein Anbauteil-Grundkörper (15) mit einem Schwenkmoment (M_{S}) belastet ist, während gleichzeitig ein mit Bezug auf die Kippachse (K) gegenüberliegendes freies Armende (20) des Anbauteil-Haltearms (17) mit dem Schwenkmoment (M_{S}) in Anlage mit einem Gegenlager (39) der Innenverkleidungs-Einhängekontur (11) gedrückt ist. Erfindungsgemäß ist die Innenverkleidungs-Einhängekontur (11) aus zwei Bauteilen zusammengesetzt, und zwar aus einem Profilteil (9), an dem die Abstützbasis (31) ausgebildet ist, und aus einem Verkleidungsteil (7), an dem das Gegenlager (39) ausgebildet ist.

## Beschreibung

Die Erfindung betrifft eine Innenverkleidung für ein Fahrzeug nach dem Oberbegriff des Anspruches 1.

Im Fahrzeuginnenraum eines Fahrzeugs besteht Bedarf nach einer Aufbewahrungsmöglichkeit, die vom Fahrzeugnutzer individuell mit Kleinteilen lösbar bestückbar ist.

Vor diesem Hintergrund weist eine gattungsgemäße Innenverkleidung eine Einhängekontur auf, in die zumindest ein Anbauteil mit entsprechender Haltegeometrie lösbar eingehängt werden kann. Die Haltegeometrie des Anbauteils weist einen Haltearm auf. Dieser ist bei eingehängtem Anbauteil auf einer Abstützbasis der Innenverkleidungs-Einhängekontur abgestützt, und zwar unter Bildung einer Kippachse, um die ein Anbauteil-Grundkörper mit einem Schwenkmoment, das sich aufgrund des Anbauteil-Gewichts einstellt, belastet ist, während gleichzeitig ein mit Bezug auf die Kippachse gegenüberliegendes freies Armende des Anbauteil-Haltearms mit dem Schwenkmoment in Anlage mit einem Gegenlager der Innenverkleidungs-Einhängekontur gedrückt ist.

Das obige Einhängekonzept ist nicht ohne Weiteres in einer bereits bestehenden Innenverkleidung realisierbar. Im Stand der Technik muss daher eine bestehende Innenverkleidung konstruktiv und fertigungstechnisch aufwändig umgestaltet werden, um die oben definierte Aufbewahrungsmöglichkeit zu realisieren.

Aus der DE 102 36 072 A1 ist ein Befestigungssystem zur Befestigung von Zubehörteilen in einem Kraftfahrzeug bekannt, das eine in einer Fahrgastzelle des Kraftfahrzeugs angebrachte Schiene aufweist, an der ein Aufhängungskopf eines Zubehörteils zeitweilig befestigbar ist.

Aus der EP 2 942 236 A1 ist eine Nutzfahrzeugkabine mit einem mobilen Stauraum bekannt. Der mobile Stauraum wird durch ein Transportbehältnis gebildet, das mit einer Befestigungseinrichtung an einer Türinnenseite einer beifahrerseitigen Kabinentür lösbar einhängbar ist.

Die Aufgabe der Erfindung besteht darin, eine Innenverkleidung für ein Fahrzeug bereitzustellen, bei der die oben definierte Ablagemöglichkeit im Vergleich zum Stand der Technik in einfacher Weise realisierbar ist.

Die Aufgabe ist durch die Merkmale des Anspruches 1 gelöst. Bevorzugte Weiterbildungen der Erfindung sind in den Unteransprüchen offenbart.

Die Erfindung betrifft eine Innenverkleidung für ein Fahrzeug mit einer Einhängekontur, in die zumindest ein Anbauteil mit entsprechender Haltegeometrie lösbar einhängbar ist. Die Haltegeometrie des Anbauteils weist einen Haltearm auf. Dieser ist bei eingehängtem Anbauteil auf einer Abstützbasis der Innenverkleidungs-Einhängekontur abgestützt, und zwar unter Bildung einer Kippachse, um die ein Anbauteil-Grundkörper mit einem Schwenkmoment, das sich zum Beispiel aufgrund des Anbauteilgewichts einstellt, belastet ist. Gleichzeitig ist ein mit Bezug auf die Kippachse gegenüberliegendes freies Armende des Anbauteil-Haltearms mit dem Schwenkmoment in Anlage mit einem Gegenlager der Innenverkleidungs-Einhängekontur gedrückt. Im Hinblick auf eine einfache Realisierung des oben definierten Einhängekonzepts sind bei der erfindungsgemäßen Innenverkleidung gemäß dem kennzeichnenden Teil des Anspruches 1 die folgenden Maßnahmen getroffen: So ist die Innenverkleidungs-Einhängekontur aus zwei Bauteilen zusammengesetzt, und zwar aus einem Profilteil, an dem die Abstützbasis ausgebildet ist, und aus einem Verkleidungsteil, an dem das Gegenlager ausgebildet ist. Auf diese Weise ergeben sich konstruktive und fertigungstechnische Freiheitsgrade bei der Herstellung der Einhängekontur, und zwar durch die Aufteilung des Gegenlagers und der Abstützbasis auf unterschiedliche Bauteile. Beispielhaft können die Abstützbasis und das Gegenlager aus unterschiedlichen Werkstoffen ausgebildet sein, die jeweils im Hinblick auf die Funktion der Abstützbasis und des Gegenlagers optimiert sind.

In einer technischen Umsetzung kann die Abstützbasis auf der Sichtseite des Profilteils ausgebildet sein, während das Gegenlager auf einer von der Sichtseite abgewandten Rückseite des Verkleidungsteils ausgebildet ist. In diesem Fall kann die sichtgeschützte Rückseite des Verkleidungsteils aus einem kostengünstigen, kratzempfindlichen Material fertigbar werden.

Die erfindungsgemäße Innenverkleidung kann neben dem obigen ersten Verkleidungsteil ein zweites Verkleidungsteil aufweisen. In diesem Fall kann das Profilteil in einem Fugenbereich zwischen den beiden Verkleidungsteilen angeordnet sein. In einer konkreten Ausführungsform kann das erste Verkleidungsteil ein Rahmenteil einer Türinnenverkleidung einer Fahrzeugtür sein, während das zweite Verkleidungsteil eine Ablagefachrückwand der Türinnenverkleidung der Fahrzeugtür ist.

Gegebenenfalls können die beiden Verkleidungsteile lediglich nur geometrisch geringfügig angepasst sein, um das erfindungsgemäße Einhängekonzept zu realisieren, und zwar im Vergleich zu einer bereits bestehenden Innenverkleidung aus zwei über einen Fugenbereich aneinander grenzende Verkleidungsteile.

Ein Einhängevorgang zum Einhängen des Anbauteils in die Innenverkleidungs-Einhängekontur ist wie folgt durchführbar: So kann der Anbauteil-Haltearm in einen Einführspalt zwischen der Abstützbasis und dem Gegenlager der Innenverkleidungs-Einhängekontur zunächst eingeführt werden. Anschließend kann der Anbauteil-Haltearm in einer Schwenkbewegung um die Kippachse bis in eine Einhängeposition eingeschwenkt werden. In der Einhängeposition kann der Anbauteil-Haltearm zwischen der Abstützbasis und dem Gegenlager der Innenverkleidungs-Einhängekontur abgestützt sein. Um die Einhängeposition des Anbauteils in der Innenverkleidungs-Einhängekontur lagerichtig zu finden, kann das Anbauteil einen Schwenkanschlag aufweisen. Dieser gerät mit Erreichen der Einhängeposition in Anlage mit einem Schwenkanschlag-Gegenprofil, das an der Innenverkleidungs-Einhängekontur ausgebildet ist.

Um einen wackelfreien Festsitz des an der Innenverkleidungs-Einhängekontur eingehängten Anbauteils zu erzielen, ist folgende Maßnahme durchführbar: In der Einhängeposition kann unter Nutzung der Elastizität des ersten Verkleidungsteils eine mechanische Vorspannung zwischen dem freien Armende und dem Schwenkanschlag des Anbauteils aufgebaut werden.

Darüber hinaus kann folgende Maßnahme zur Sicherung des Anbauteils in seiner Einhängeposition erfolgen: So kann das Anbauteil ein Rastelement aufweisen, das mit Erreichen der Einhängeposition in lösbarem Rasteingriff mit einem korrespondierenden Rast-Gegenprofil der Innenverkleidungs-Einhängekontur kommt. Das Rastelement kann als ein Rastarm ausgebildet sein, der zusammen mit dem Haltearm gleichgerichtet von dem Anbauteil-Grundkörper abragt.

Im Hinblick auf eine weitere Verbesserung einer spielfreien Halterung des Anbauteils an der Einhängekontur ist folgende Maßnahme durchführbar: So kann zwischen dem Rastarm und dem Haltearm ein Klemmspalt definiert sein. In der Einhängeposition des Anbauteils kann ein der Innenverkleidungs-Einhängekontur ausgebildetes Klemm-Gegenprofil im Klemmspalt des Anbauteils eingeklemmt sein, und zwar unter Aufbau einer Klemmkraft, mittels der der Haltearm und der Rastarm gegen das zwischengeordnete Klemm-Gegenprofil der Innenverkleidungs-Einhängekontur drücken.

Die lösbare Rastverbindung zwischen dem Anbauteil und der Innenverkleidungs-Einhängekontur ist wie folgt technisch umsetzbar: So kann das Rastelement beim Einhängevorgang unter Aufbau einer elastischen Rückstellkraft ein an der Innenverkleidungs-Einhängekontur ausgebildetes Rast-Gegenprofil überwinden. Das Rastelement kann im weiteren Verlauf des Einhängevorgangs mit Erreichen der Einhängeposition unter zumindest teilweisem Abbau der elastischen Rückstellkraft das Rast-Gegenprofil der Innenverkleidungs-Einhängekontur hintergreifen.

In einer konkreten Ausführungsform kann das Profilteil den Fugenbereich zwischen den ersten und zweiten Verkleidungsteilen überdecken. Das Profilteil kann unterteilt sein in einen sichtgeschützten Abschnitt sowie in einen sichtseitigen Abschnitt. Der sichtgeschützte Abschnitt des Profilteils kann an der Rückseite des ersten Verkleidungsteils befestigbar sein, und zwar insbesondere über einen Kunststoff-Nietprozess, während der sichtseitige Abschnitt des Profilteils auf der Sichtseite des zweiten Verkleidungsteils befestigbar ist.

Nachfolgend ist ein Ausführungsbeispiel der Erfindung anhand der beigefügten Figuren beschrieben.

Es zeigen:
- Figuren 1 bis 6: unterschiedliche Ansichten, die das erfindungsgemäße Einhängekonzept Veranschaulichen; und
- Figur 7: eine Ansicht, anhand der ein Verfahren zur Fertigung eines Anbauteils angedeutet ist.

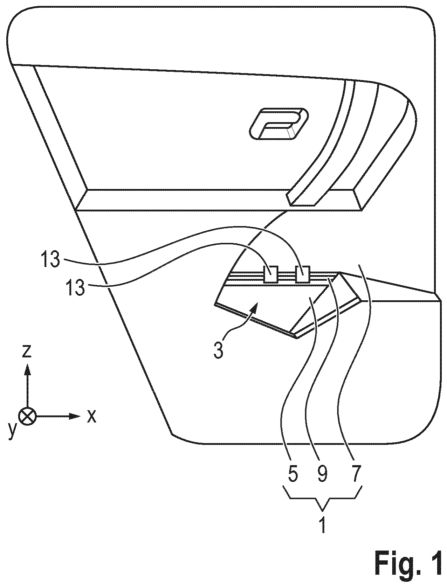

In der Figur 1 ist eine Tür-Innenverkleidung 1 einer Fahrzeugseitentür angedeutet, die ein unteres Ablagefach 3 aufweist. Das untere Ablagefach 3 ist von einer in der Fahrzeugquerrichtung y äußeren Ablagefachrückwand 5 begrenzt. An die Ablagefachrückwand 5 schließt sich in der Fahrzeughochrichtung z nach fahrzeugoben ein Rahmenteil 7 an. Das Rahmenteil 7 bildet ein erstes Verkleidungsteil im Sinne der Erfindung, während die Ablagefachrückwand 5 ein zweites Verkleidungsteil im Sinne der Erfindung darstellt.

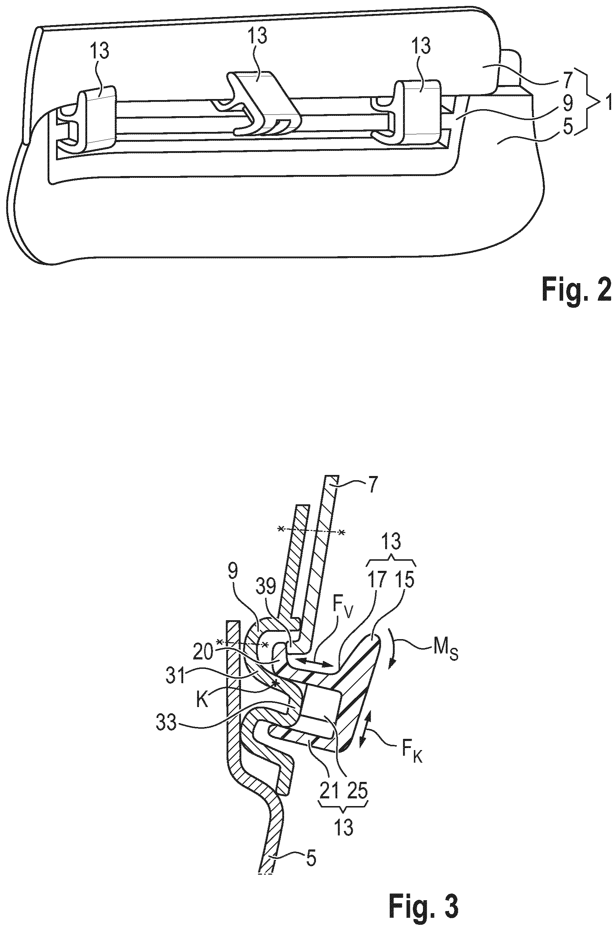

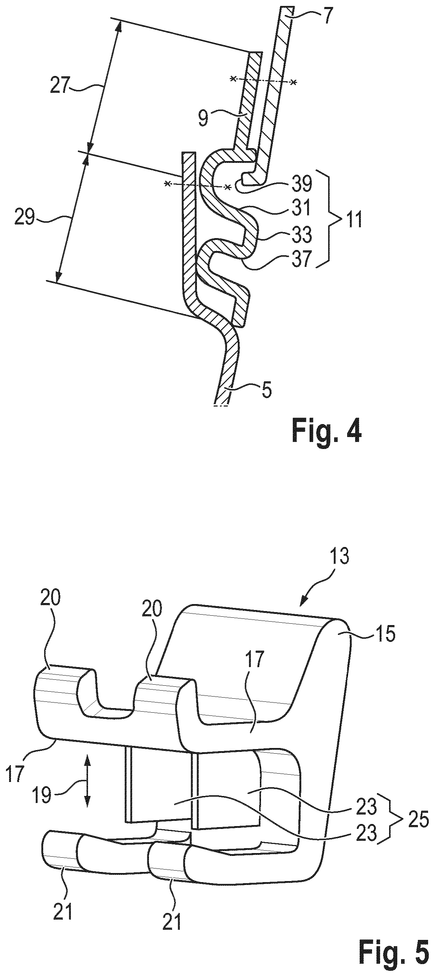

Wie aus den Figuren 1 und 2 weiter hervorgeht, ist in einem Fugenbereich zwischen der Ablagefachrückwand 5 und dem Rahmenteil 7 eine Profilschiene 9 angeordnet. Diese bildet zusammen mit dem Rahmenteil 7 eine Einhängekontur 11 (Figur 4), in der in der Figur 1 Anbauteile 13 mit entsprechender Haltegeometrie lösbar eingehängt sind. In der Figur 1 sind beispielhaft zwei Anbauteile 13 eingehängt, die in der Fahrzeuglängsrichtung x verschiebbar sind, jedoch in der Fahrzeughochrichtung z sowie in der Fahrzeugquerrichtung y in spielfreiem Sitz positioniert sind. **In** der Figur 2 sind dagegen drei Anbauteile 13 gezeigt, von denen das mittlere Anbauteil 13 von der Einhängekontur 11 gelöst ist, während die beiden äußeren Anbauteile 13 eingehängt sind.

Eines der Anbauteile 13 ist in der Figur 5 in Alleinstellung gezeigt. Demnach weist das aus Kunststoff gefertigte Anbauteil 13 einen Anbauteil-Grundkörper 15 auf, von dem ein oberer Haltearm 17 und ein über einen Klemmspalt 19 beabstandeter unterer Rastarm 21 gleichgerichtet sowie in etwa parallel abragen. Der obere Haltearm 17 weist zwei voneinander beabstandete hakenförmige Armenden 20 auf, während der untere Rastarm 21 aus zwei voneinander beabstandeten Teil-Rastarmen besteht, die elastisch nachgiebig am Anbauteil-Grundkörper 15 angeformt sind. In einem Inneneckbereich zwischen dem oberen Haltearm 17 und dem Anbauteil-Grundkörper 15 sind zwei ebenfalls voneinander beabstandete Anlagerippen 23 ausgebildet, die einen später beschriebenen Schwenkanschlag 25 bilden und den oberen Haltearm 17 starr am Anbauteil-Grundkörper 15 anbinden.

Insgesamt besteht die Haltegeometrie des Anbauteils 13 aus dem oberen Haltearm 17, dem Schwenkanschlag 25 und dem unteren Rastarm 21.

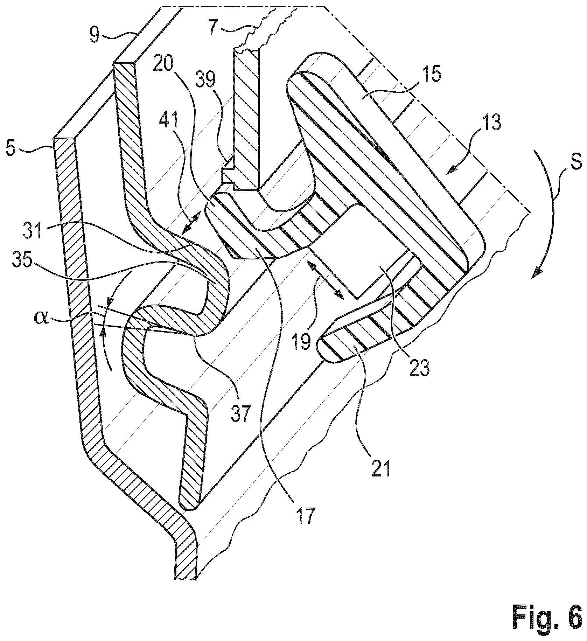

Nachfolgend ist anhand der Figuren 3, 4 und 6 die Innenverkleidungs-Einhängekontur 11 beschrieben. Diese setzt sich aus der Profilschiene 9 und aus dem Rahmenteil 7 zusammen. Gemäß der Figur 4 ist die Profilschiene 9 in einen sichtgeschützten Abschnitt 27 und in einen sichtseitigen Abschnitt 29 unterteilt. Der sichtgeschützte Abschnitt 27 der Profilschiene 9 ist an der Rückseite des Rahmenteils 7 mittels nicht gezeigter Kunststoffnietstellen befestigt. Demgegenüber ist der sichtseitige Abschnitt 27 der Profilschiene 9 auf der Sichtseite der Ablagefachrückwand 5 ebenfalls mittels nicht gezeigter Kunststoffnietstellen befestigt. Am sichtseitigen Profilschienen-Abschnitt 29 ist eine Abstützbasis 31 ausgebildet, die mit dem Anbauteil-Haltearm 17 zusammenwirkt. Der sichtseitige Profilschienen-Abschnitt 29 weist im weiteren Verlauf nach fahrzeugunten ein Schwenkanschlag-Gegenprofil 33 auf, das mit dem Anbauteil-Schwenkanschlag 25 zusammenwirkt. Ferner weist der sichtseitige Profilschienen-Abschnitt 29 ein Klemm-Gegenprofil 35 (Figur 6) auf, das mit dem Anbauteil-Klemmspalt 19 (Figur 6) zusammenwirkt. Zudem ist ein Rast-Gegenprofil 37 vorgesehen, das mit dem unteren Rastarm 21 des Anbauteils 13 zusammenwirkt.

Darüber hinaus weist die Innenverkleidungs-Einhängekontur 11 ein Gegenlager 39 auf, das am unteren Rand des Rahmenteils 7 an dessen Rückseite gebildet ist. Das Gegenlager 39 ist unter Materialverdickung nach Art einer Verstärkungsrippe realisiert.

In der Figur 3 ist das Anbauteil 13 in seiner Einhängeposition gezeigt. Demnach ist der obere Anbauteil-Haltearm 17 durch einen Einführspalt 41 (Figur 6) geführt; die beiden freien hakenförmigen Armenden 20 des Haltearms 17 hintergreifen das am Rahmenteil 7 ausgebildete Gegenlager 39. In der Einhängeposition ist der Anbauteil-Haltearm 17 auf der Abstützbasis 31 der Innenverkleidungs-Einhängekontur 11 abgestützt, und zwar unter Bildung einer Kippachse K (Figur 3), um die der Anbauteil-Grundkörper 15 mit einem Schwenkmoment M_{S} belastet ist, während gleichzeitig die mit Bezug auf die Kippachse K gegenüberliegenden freien Armenden 20 des Anbauteil-Haltearms 17 mit dem Schwenkmoment M_{S} in Anlage mit dem Gegenlager 39 der Innenverkleidungs-Einhängekontur 11 gedrückt ist. In der in der Figur 3 dargestellten Einhängeposition ist der Schwenkanschlag 25 des Anbauteils 13 in Anlage mit dem Schwenkanschlag-Gegenprofil 33. In der dargestellten Einhängeposition ist unter Nutzung der Elastizität des Anschlags am Rahmenteil 7 eine mechanische Vorspannung F_{V} zwischen den freien Armenden 20 und dem Schwenkanschlag 25 des Anbauteils 13 aufgebaut, um den Festsitz in der Fahrzeugquerrichtung y zu realisieren. Außerdem ist in der Figur 3 das Klemmprofil 35 der Profilschiene 9 unter Aufbau einer Klemmspannung F_{K} zwischen dem oberen Haltearm 17 und dem unteren Rastarm 21 geklemmt, wodurch auch ein Festsitz in Fahrzeughochrichtung z gewährleistet ist. Der untere Rastarm 21 ist zur Sicherung in der Einhängeposition in lösbarem Rasteingriff mit dem korrespondierenden Rast-Gegenprofil 37 der Profilschiene 9. Wie aus der Figur 6 hervorgeht, ist das Rast-Gegenprofil 37 mit einem Hinterschneidungswinkel α gebildet, in den der Rastarm 21 des Anbauteils 13 unter elastischer Verformung lösbar einrasten kann. Im eingerasteten Zustand ist das Klemm-Gegenprofil 35 der Profilschiene 9 zwischen dem elastisch verformten Rastarm 21 und dem Anbauteil-Haltearm 17 geklemmt.

Nachfolgend wird anhand der Figur 6 ein Einhängevorgang beschrieben, bei dem das Anbauteil 13 bis in die Einhängeposition K in die Innenverkleidungs-Einhängekontur 11 eingehängt wird. Demnach wird zunächst der Anbauteil-Haltearm 17 mit seinen freien hakenartigen Haltearm-Enden 20 in den Einführspalt 41 eingeführt. Im weiteren Verlauf wird der Anbauteil-Haltearm 17 in einer Schwenkbewegung S um die Kippachse K bis in die Einhängeposition eingeschwenkt, in der der Anbauteil-Haltearm 17 zwischen der Abstützbasis 31 und dem Gegenlager 39 der Innenverkleidungs-Einhängekontur 11 abgestützt ist. Mit Erreichen der Einhängeposition gerät der Schwenkanschlag 25 des Anbauteils 13 in Anlage mit dem Schwenkanschlag-Gegenprofil 33. Gleichzeitig überwindet der untere Rastarm 21 unter Aufbau einer elastischen Rückstellkraft das Rast-Gegenprofil 37 der Profilschiene 9. Mit Erreichen der Einhängeposition hintergreift der Rastarm 21 unter zumindest teilweisem Abbau der elastischen Rückstellkraft das Rast-Gegenprofil 37. Der in der Einhängeposition nach wie vor elastisch vorgespannte Rastarm 21 belastet den Anbauteil-Grundkörper 15 mit dem Schwenkmoment M_{S} nach fahrzeugunten.

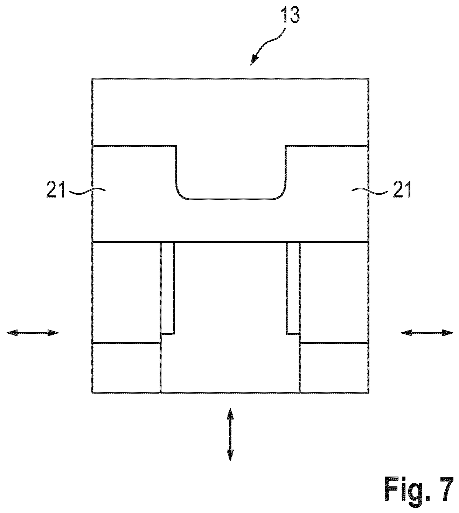

Das Anbauteil 13 ist fertigungstechnisch einfach in einem Kunststoff-Spritzgießprozess herstellbar, und zwar mittels zweier zueinander gegenläufig verstellbarer Spritzgießwerkzeuge und einem Schieber 43, der in der Figur 7 angedeutet ist. Nach erfolgtem Spritzgießprozess werden die beiden Spritzgießwerkzeuge gemäß der Figur 7 in einer horizontalen Entformungsrichtung X nach außen verstellt, während der Schieber 43 in einer quer dazu ausgerichteten Entformungsrichtung Y nach außen verstellt wird.

### Bezugszeichenliste

- 1: Innenverkleidung
- 3: Ablagefach
- 5: Ablagefach-Rückwand
- 7: Rahmenteil
- 9: Profilteil bzw. Profilschiene
- 11: Einhängekontur
- 13: Anbauteil
- 15: Anbauteil-Grundkörper
- 17: Anbauteil-Haltearm
- 19: Klemmspalt
- 20: hakenförmige Armenden
- 21: Anbauteil-Rastarm
- 23: Anlagerippen
- 25: Schwenkanschlag
- 27: sichtgeschützter Abschnitt
- 29: sichtseitiger Abschnitt
- 31: Abstützbasis
- 33: Schwenkanschlag-Gegenprofil
- 35: Klemm-Gegenprofil
- 37: Rast-Gegenprofil
- 39: Gegenlager
- 41: Einführspalt
- K: Kippachse
- F_{V}: Vorspannung
- F_{K}: Klemmkraft
- S: Schwenkbewegung
- α: Hinterschneidungswinkel

## Patentansprüche

1. Innenverkleidung (1) für ein Fahrzeug, mit einer Einhängekontur (11), in die zumindest ein Anbauteil (13) lösbar einhängbar ist, wobei das Anbauteil (13) einen Haltearm (17) aufweist, der bei eingehängtem Anbauteil (13) auf einer Abstützbasis (31) der Einhängekontur (11) der Innenverkleidung (1) abgestützt ist unter Bildung einer Kippachse (K), um die ein Anbauteil-Grundkörper (15) mit einem Schwenkmoment (M_{S}) belastet ist, während gleichzeitig ein mit Bezug auf die Kippachse (K) gegenüberliegendes freies Armende (20) des Anbauteil-Haltearms (17) mit dem Schwenkmoment (M_{S}) in Anlage mit einem Gegenlager (39) der Innenverkleidungs-Einhängekontur (11) gedrückt ist, **dadurch gekennzeichnet, dass** die Innenverkleidungs-Einhängekontur (11) aus zwei Bauteilen zusammengesetzt ist, und zwar aus einem Profilteil (9), an dem die Abstützbasis (31) ausgebildet ist, und aus einem Verkleidungsteil (7), an dem das Gegenlager (39) ausgebildet ist.

2. Innenverkleidung (1) nach Anspruch 1, **dadurch gekennzeichnet, dass** die Abstützbasis (31) auf der Sichtseite des Profilteils (9) ausgebildet ist, während das Gegenlager (39) auf einer von der Sichtseite abgewandten Rückseite des Verkleidungsteils (7) ausgebildet ist, so dass insbesondere die sichtgeschützte Rückseite des Verkleidungsteils (7) aus einem kostengünstigen, kratzempfindlichen Material fertigbar ist.

3. Innenverkleidung (1) nach Anspruch 1 oder 2, **dadurch gekennzeichnet, dass** die Innenverkleidung (1) neben dem ersten Verkleidungsteil (7) ein zweites Verkleidungsteil (5) aufweist, und dass insbesondere das Profilteil (9) in einem Fugenbereich zwischen den beiden Verkleidungsteilen (5, 7) angeordnet ist.

4. Innenverkleidung (1) nach einem der vorhergehenden Ansprüche, **dadurch gekennzeichnet, dass** bei einem Einhängevorgang der Anbauteil-Haltearm (17) in einen Einführspalt (41) zwischen der Abstützbasis (31) und dem Gegenlager (39) der Innenverkleidungs-Einhängekontur (11) einführbar ist, und anschließend der Anbauteil-Haltearm (17) in einer Schwenkbewegung (S) um die Kippachse (K) bis in eine Einhängeposition einschwenkbar ist, in der der Anbauteil-Haltearm (17) zwischen der Abstützbasis (31) und dem Gegenlager (39) der Innenverkleidungs-Einhängekontur (11) abgestützt ist, und dass insbesondere das Anbauteil (13) einen Schwenkanschlag (25) aufweist, der mit Erreichen der Einhängeposition in Anlage mit einem Schwenkanschlag-Gegenprofil (33) der Innenverkleidungs-Einhängekontur (11) kommt.

5. Innenverkleidung (1) nach Anspruch 4, **dadurch gekennzeichnet, dass** in der Einhängeposition unter Nutzung der Elastizität zwischen dem ersten Verkleidungsteil (7) und der Profilschiene (9) eine mechanische Vorspannung (F_{V}) zwischen dem freien Armende (20) und dem Schwenkanschlag (25) des Anbauteils (13) aufgebaut ist.

6. Innenverkleidung (1) nach Anspruch 4 oder 5, **dadurch gekennzeichnet, dass** zur Sicherung der Einhängeposition das Anbauteil (13) ein Rastelement (21) aufweist, das mit Erreichen der Einhängeposition in lösbaren Rasteingriff mit einem korrespondierenden Rast-Gegenprofil (37) der Innenverkleidungs-Einhängekontur (11) kommt.

7. Innenverkleidung (1) nach Anspruch 6, **dadurch gekennzeichnet, dass** das Rastelement (21) ein Rastarm ist, der zusammen mit dem Haltearm (17) gleichgerichtet von dem Anbauteil-Grundkörper (15) abragt, dass insbesondere zwischen dem Rastarm (21) und dem Haltearm (17) ein Klemmspalt (19) definiert ist, und dass insbesondere in der Einhängeposition des Anbauteils (13) ein Klemm-Gegenprofil (35) der Innenverkleidungs-Einhängekontur (11) im Klemmspalt (19) des Anbauteils (13) eingeklemmt ist, und zwar unter Aufbau einer Klemmkraft (F_{K}).

8. Innenverkleidung (1) nach Anspruch 6 oder 7, **dadurch gekennzeichnet, dass** das Rastelement (21) beim Einhängevorgang unter Aufbau einer elastischen Rückstellkraft ein an der Innenverkleidungs-Einhängekontur (11) ausgebildetes Rast-Gegenprofil (37) überwindet, und dass das Rastelement (21) mit Erreichen der Einhängeposition unter zumindest teilweisem Abbau der elastischen Rückstellkraft das Rast-Gegenprofil (37) hintergreift.

9. Innenverkleidung (1) nach einem der Ansprüche 3 bis 8, **dadurch gekennzeichnet, dass** das Profilteil (9) unterteilt ist in einen sichtgeschützten Abschnitt (27), der an der Rückseite des ersten Verkleidungsteils (7) befestigbar ist, und in einen sichtseitigen Abschnitt (29), der auf der Sichtseite des zweiten Verkleidungsteils (5) befestigbar ist.

10. Innenverkleidung (1) nach einem der vorhergehenden Ansprüche, **dadurch gekennzeichnet, dass** die Abstützbasis (31), das Schwenkanschlag-Gegenprofil (33), das Rast-Gegenprofil (37) und das Klemm-Gegenprofil (35) der Einhängekontur (11) auf der Sichtseite des Profilteils (9) ausgebildet sind.
